(19) Europäisches Patentamt
European Patent Office
Office européen des brevets

(11) **EP 1 247 873 B1**

(12) **EUROPÄISCHE PATENTSCHRIFT**

(45) Veröffentlichungstag und Bekanntmachung des Hinweises auf die Patenterteilung:
**23.07.2008 Patentblatt 2008/30**

(51) Int Cl.:
*C22F 1/04* (2006.01)    *C22C 21/00* (2006.01)
*B32B 15/01* (2006.01)    *F28F 21/08* (2006.01)

(21) Anmeldenummer: **02007104.9**

(22) Anmeldetag: **28.03.2002**

(54) **Verfahren zur Herstellung von AlMn-Bändern oder -Blechen**

Process for producing AlMn strip or sheet

Procédé de fabrication de feuillards ou de bandes en AlMn

(84) Benannte Vertragsstaaten:
**AT BE CH CY DE DK ES FI FR GB GR IE IT LI LU MC NL PT SE TR**

(30) Priorität: **04.04.2001 DE 10116636**

(43) Veröffentlichungstag der Anmeldung:
**09.10.2002 Patentblatt 2002/41**

(73) Patentinhaber: **Hydro Aluminium Deutschland Gesellschaft mit beschränkter Haftung
51149 Köln (DE)**

(72) Erfinder:
• **Wagner, Pascal, Dr.
50737 Köln (DE)**
• **Wieser, Dietrich, Dr.
53125 Bonn (DE)**
• **Finkelnburg, Wolf Dieter, Dipl.-Phys.
53117 Bonn (DE)**
• **Mrotzek, Manfred, Dipl.-Phys.
21614 Buxtehude (DE)**

(74) Vertreter: **Cohausz & Florack
Patent- und Rechtsanwälte
Bleichstrasse 14
40211 Düsseldorf (DE)**

(56) Entgegenhaltungen:
**WO-A-97/18946**

• **DATABASE CA [Online] CHEMICAL ABSTRACTS SERVICE, COLUMBUS, OHIO, US; FUJIMOTO, HIDEO: "Aluminum alloy fins for assembling of heat exchangers by vacuum brazing" retrieved from STN Database accession no. 117:74471 CA XP002206405 -& JP 03 287738 A (KOBE STEEL, LTD., JAPAN) 18. Dezember 1991 (1991-12-18)**

**Beschreibung**

Die Erfindung betrifft ein Verfahren zur Herstellung von AlMn-Bändern oder -Blechen für die Herstellung von Bauteilen durch Löten.

Beispielsweise Wärmetauscher für Kraftfahrzeuge werden üblicherweise aus Aluminium-Blechen hergestellt, indem die einzelnen vorgefertigten Komponenten des Wärmetauschers, wie Lamellen, Rohre, Verteiler, durch Löten miteinander verbunden werden. Die Belastungen, die im praktischen Einsatz auf derart hergestellte, in Automobilen eingebaute Bauteile aufgrund von stoßartigen Erschütterungen, länger andauernden Vibrationen, Korrosionsangriff und ähnlichem einwirken, sind erheblich. Dies betrifft insbesondere die Lamellen, über welche die Wärmeabfuhr erfolgt.

Defekte an diesen Wärmetauscherbauteilen, die in Folge unzureichender Eigenschaften des Aluminium-Werkstoffs eintreten, können zu erheblichen Schäden führen. Besonders problematisch haben sich in diesem Zusammenhang in der Vergangenheit diejenigen Bereiche der betreffenden Bauteile erwiesen, in denen es aufgrund der beim Löten entstehenden Wärme zu Gefügeveränderungen kommt.

Aus den voranstehend genannten Gründen werden von Aluminium-Blechen der in Rede stehenden Art neben der guten Eignung zum Verlöten eine hohe Festigkeit, insbesondere eine hohe Streckgrenze $R_{p0,2}$ und Zähigkeit auch nach dem Löten gefordert. Gleichzeitig müssen die betreffenden Aluminium-Bleche gut verformbar sein und eine hohe Korrosionbeständigkeit besitzen.

Aus der WO 97/18946 ist ein Werkstoff für die Herstellung von Lamellen für Wärmetauscher bekannt, der (in Gewichts-%) 0,2 - 0,5 % Fe, 0,7 - 1,2 % Si, 1,2 - 1,6 % Mn, ≤ 0,3 % Mg, ≤ 0,05 % Cu, ≤ 0,2 % Zn, ≤ 0,1 % Ti und unvermeidbare Begleitelemente, deren einzelne Gehalte höchstens 0,05 % und deren Summe höchstens 0,15 % beträgt, sowie als Rest Aluminium enthält. Aus diesem Werkstoff werden Barren als Vormaterial gegossen, die anschließend auf eine Walzanfangstemperatur von mindestens 520 °C vorgewärmt und warmgewalzt werden. Das darauf folgende Kaltwalzen auf Enddicke erfolgt in mindestens zwei Schritten, wobei zwischen den Kaltwalzschritten für zwei Stunden eine Zwischenglühung bei einer zwischen 360 °C und 400 °C liegenden Glühtemperatur durchgeführt werden muß.

Bei der praktischen Erprobung des gemäß dem bekannten Verfahren hergestellten Werkstoffs hat sich gezeigt, daß die Materialeigenschaften der gemäß dem Stand der Technik hergestellten Aluminium-Bleche für bestimmte Anwendungsfälle nicht ausreichend sind. Dies gilt insbesondere für die nach dem Löten im Bereich der Lötstellen noch bestehende Festigkeit und die Korrosionsbeständigkeit. Zudem zeigt sich beispielsweise bei der Herstellung von Wärmetauschern, daß die Möglichkeiten der Kombination von aus dem aus der WO 97/18946 bekannten Werkstoff hergestellten Bauteilen mit aus einem anderen Leichtmetallwerkstoff hergestellten Wärmetauscherbauteilen aufgrund des zu geringen Unterschieds der Korrosionspotentiale eingeschränkt sind.

Die Aufgabe der Erfindung besteht darin, ausgehend von dem voranstehend erläuterten Stand der Technik ein Verfahren anzugeben, mit welchem sich auf kostengünstige Weise Aluminium-Bleche herstellen lassen, die auch nach dem Löten sicher eine hohe Festigkeit, insbesondere eine hohe Streckgrenze, sowie eine hervorragende Korrosionsbeständigkeit besitzen.

Diese Aufgabe wird durch ein Verfahren zur Herstellung von AlMn-Blechen für die Herstellung von Bauteilen durch Löten gelöst,

- bei dem aus einer Schmelze, welche (in Gewichts-%) 0,3 - 1,2 % Si, ≤ 0,5 % Fe, ≤ 0,1 % Cu, 1,0 - 1,8 % Mn, ≤ 0,3 % Mg, 0,05 - 0,4 % Cr + Zr, ≤ 0,1 % Zn, ≤ 0,1 % Ti, ≤ 0,15 % Sn und unvermeidbare Begleitelemente, deren einzelne Gehalte höchstens 0,05 % und deren Summe höchstens 0,15 % beträgt, sowie als Rest Aluminium enthält, ein Vormaterial erzeugt wird,

- bei dem das Vormaterial bei einer weniger als 520 °C betragenden Vorwärmtemperatur über eine Haltezeit von maximal 12 Stunden vorgewärmt wird,

- bei dem das vorgewärmte Vormaterial zu einem Warmband warmgewalzt wird,

- bei dem das Warmband ohne Zwischenglühung zu Kaltband kaltgewalzt wird und

- bei dem das Kaltband schließlich einer Glühbehandlung unterzogen wird.

Die Erfindung geht von einer Zusammensetzung der zur Erzeugung des Vormaterials verwendeten Schmelze aus, deren Legierungsgehalte so aufeinander abgestimmt sind, daß insbesondere die Gefahr einer interkristallinen Korrosion auf ein Minimum reduziert und der Korrosionsangriff aufgrund von Lochfraß gleichmäßig über die Fläche verteilt ist. Infolgedessen ist eine hohe Korrosionsbeständigkeit gewährleistet.

Gleichzeitig sind die erfindungsgemäß verwendete Legierung und die Parameter des Verfahrens zu ihrer Verarbeitung derart optimiert, daß sich aus ihr auf einfache Weise bei einer im mittleren Temperaturbereich liegenden Warmwalztemperatur ohne die Notwendigkeit einer Zwischenglühung während des Kaltwalzens ein gut verformbares Aluminium-Blech erzeugen läßt, welches auch nach dem Löten hohe Festigkeiten, insbesondere hohe Werte der Streckgrenze $R_{p0,2}$ und eine gute Bruchdehnung aufweist.

Es ist festgestellt worden, daß bei erfindungsgemäß erzeugten Blechen nach dem Löten die Streckgrenze $R_{p0,2}$ bei wenigstens 60 MPa liegt. In vielen Fällen konnte sogar eine Streckgrenze $R_{p0,2}$ von mindestens 65 MPa festgestellt werden. Das Korrosionspotential betrug regelmäßig weniger als -750 mV, in vielen Fällen sogar weniger als -800 mV (gemessen gegen GKE nach ASTM G69).

Auch in erfindungsgemäß erzeugten AlMn-Blechen hat der Silizium-Gehalt einen positiven Einfluß auf die Festigkeit des Blechs nach dem Löten. Gleichzeitig hat sich jedoch gezeigt, daß Silizium in Wechselwirkung mit Zinn die Entstehung interkristalliner Korrosion beeinflußt. In der erfindungsgemäß verwendeten Legierung ist daher der für den Silizium-Gehalt vorgegebene Bereich im Verhältnis zum Gehalt an Zinn so gewählt worden, daß eine hinsichtlich der Vermeidung von interkristalliner Korrosion optimierte Zusammensetzung eingestellt werden kann. Die gewährleistet eine gute Korrosionsbeständigkeit des erfindungsgemäß erzeugten AlMn-Blechs bei gleichzeitig hoher Festigkeit.

Letzteres gilt insbesondere dann, wenn das Verhältnis des Zinn-Gehaltes [%Sn] zum Silizium-Gehalt [%Si] der Schmelze ≥ 0,03 ist, wobei sich die Wechselwirkung des Gehalts an Silizium und Zinn weiter optimieren läßt, indem das Verhältnis [%Sn] / [%Si] ≥ 0,1 eingestellt wird.

Notwendig ist die Zulegierung von Zinn in dem angegebenen Verhältnis spätestens dann, wenn der Si-Gehalt der Schmelze mindestens 0,75 Gew.-% beträgt. Empfehlenswert ist eine Zinn-Zugabe in den angegebenen Verhältnissen jedoch schon bei Si-Gehalten von 0,5 Gew.-% und mehr.

Bei einer Beschränkung der oberen Grenze des für den Si-Gehalt vorgegebenen Bereichs auf höchstens 1,0 Gew.-% lassen sich in der erfindungsgemäßen Weise besonders sicher Aluminium-Bleche erzeugen, bei denen einerseits eine optimiert hohe Festigkeit und andererseits eine minimierte Gefahr interkristalliner Korrosion vorhanden ist.

Eisen begünstigt die Bildung von Primärphasen, die Silizium binden. Deshalb wurde erfindungsgemäß der Eisengehalt auf höchstens 0,5 Gew.-% begrenzt. Durch diese Begrenzung des Fe-Gehalts ist sichergestellt, daß unter den erfindungsgemäßen Fertigungsbedingungen Silizium in Lösung gehalten wird. Besonders sicher kann dies gewährleistet werden, wenn der Eisen-Gehalt auf höchstens 0,3 Gew.-% begrenzt ist.

Der Gehalt an Kupfer ist in der erfindungsgemäß verwendeten Legierung auf höchstens 0,1 Gew.-%, vorzugsweise 0,05 Gew.-%, begrenzt worden. Kupfer erhöht zwar die Festigkeit, führt jedoch auch zu einem positiven Korrosionspotential. Ein positives Korrosionspotential schränkt jedoch die Möglichkeiten einer Kombination mit anderen Werkstoffen ein. Außerdem verschlechtert sich mit zunehmendem Cu-Gehalt das Korrosionsverhalten insbesondere gegenüber interkristalliner Korrosion.

Der erfindungsgemäß vorgesehene Mn-Gehalt der Schmelze von mindestens 1,0 bis höchstens 1,8 Gew.-% unterstützt die Festigkeit des erfindungsgemäß erzeugten Blechs. Optimierte Festigkeitswerte lassen sich sicher erreichen, wenn der Mn-Gehalt der Schmelze mindestens 1,3 Gew.-% und höchstens 1,5 Gew.-% beträgt.

Magnesium wird einer erfindungsgemäß verwendeten Legierung als festigkeitssteigerndes Element zugegeben. Da Magnesium jedoch bei höheren Gehalten einen negativen Einfluß auf die Lötbarkeit beim Schutzgaslöten (CAB-Löten) hat, wird der Gehalt an Magnesium erfindungsgemäß auf maximal 0,3 Gew.-% beschränkt. Sind besonders kritische Lötprozesse zu bewältigen, so wirkt sich eine Begrenzung des Magnesium-Gehaltes auf maximal 0,1 Gew.-% günstig auf das Arbeitsergebnis aus.

Durch die Zugabe von Cr und/oder Zr zur erfindungsgemäß verwendeten Legierung werden die Festigkeit und die Korrosionsbeständigkeit weiter verbessert. Wird die Summe der Gehalte an Cr und Zr im Bereich von 0,05 - 0,4 Gew.-% gehalten, so führt dies zur Entstehung eines Longlife-Gefüges (langgestreckte, grobe Körner), in welchem die Entstehung von interkristalliner Korrosion aufgrund der reduzierten Korngrenzflächen behindert wird. In Kombination mit Mn, Fe und Ti können Cr und Zr jedoch zu groben Ausscheidungen führen, die wiederum einen negativen Einfluß auf die Verformbarkeit und Festigkeit erfindungsgemäß erzeugter Bleche haben. Daher wird in der erfindungsgemäß verwendeten Legierung der Chrom- bzw. Zirkon-Gehalt bei niedrigen Mn-Gehalten erhöht, während er bei hohen Mn-Gehalten vermindert wird.

Besonders sicher können die positiven Wirkungen von Cr und / oder Zr dann genutzt werden, wenn der Gehalt an Cr in der Schmelze im Bereich von mindestens 0,1 Gew.-% und höchstens 0,2 Gew.-% liegt und der Gehalt an Zr höchstens 0,05 Gew.-% beträgt.

Um den negativen Einfluß von Zink auf die Korrosion von Aluminium-Blechen der in Rede stehenden Art zu vermeiden, ist der Zn-Gehalt auf 0,1 Gew.-%, vorzugsweise auf 0,05 Gew.-% beschränkt.

Titan kann zur Kornfeinung des Gußgefüges mit Gehalten bis zu 0,1 Gew.-%, vorzugsweise bis zu 0,05 Gew.-%, der erfindungsgemäß verwendeten Legierung zugegeben werden.

Gemäß der derzeitigen Praxis werden als Vormaterial aus der Schmelze stranggegossene Barren verarbeitet. Selbstverständlich kann jedoch auch auf andere Weise erzeugtes Vormaterial als Ausgangsprodukt für die erfindungsgemäße Erzeugung von AlMn-Blechen verwendet werden.

Das erfindungsgemäße Verfahren ermöglicht es, bei einer vergleichbar niedrigen Vorwärmtemperatur des Metalls von weniger als 520 °C ein Warmwalzen durchzuführen, welches zu einer hinsichtlich der Verformbarkeit und Korrosionsbeständigkeit optimierten Gefügestruktur des erzeugten Warmbandes führt. Im Hinblick auf eine gute Walzbarkeit des Vormaterials beträgt die Vorwärmtemperatur dabei mindestens 400 °C.

Besonders günstig ist es, wenn das Vormaterial auf höchstens 470 °C erwärmt und die Haltezeit beim Vorwärmen auf höchstens 5 Stunden begrenzt wird, um einen möglichst hohen Anteil an Mn in Lösung zu halten. Das in Lösung gehaltene Mangan wird bei der abschließenden Glühung (Weich- / Rückglühung) und im Lötprozeß feindispers ausgeschieden und führt so zu den erwünscht hohen Festigkeiten, insbesondere zu den hohen Werten der Streckgrenze $R_{p0,2}$. Die Anfangstemperatur des Vormaterials beim Warmwalzen beträgt aus den schon erwähnten Gründen vorzugsweise mindestens 400 °C. Dabei liegt die Endwalztemperatur beim Warmwalzen oberhalb von 250 °C, vorzugsweise oberhalb von 300 °C, um einerseits eine ausreichende Verformbarkeit des Vormaterials und andererseits eine optimierte Gefügeausbildung während des Warmwalzens zu gewährleisten. Die Warmbandenddicken liegen im Bereich von 2 bis 10 mm.

Eine am Ende des erfindungsgemäßen Verfahrens durchgeführte Glühbehandlung dient der Einstellung des Lieferzustandes. Die Glühbehandlung kann dabei das Weich- oder Rückglühen des Kaltbands im Coil oder im Durchlaufglühofen umfassen. Wird ein Weichglühen durchgeführt, so sollte die Temperatur des AlMn-Blechs während des Weichglühens mindestens 300 °C, vorzugsweise mindestens 350 °C, betragen. Das derart glühbehandelte Band wird im Zustand "0" (weichgeglüht) beim Verarbeiter angeliefert.

Soll dagegen Material im angelassenen Zustand, beispielsweise im Zustand H22 (kaltverfestigt, rückgeglüht, 1/4-hart), H24 (kaltverfestigt, rückgeglüht, 2/4-hart) oder im Zustand H26 (kaltverfestigt, rückgeglüht, 3/4-hart), geliefert werden, so wird die Glühbehandlung als Rückglühung im Coil oder im Durchlaufglühofen mit entsprechend einzustellender Temperatur durchgeführt.

Typische Dicken des kaltgewalzten fertigen Bandes liegen zwischen 50 und 500 µm.

Für die weitere Verarbeitung des erfindungsgemäß erzeugten Bandes kann es darüber hinaus günstig sein, wenn das Band ein- oder beidseitig mit einer oder zwei Al-Legierungen, mit Plattierschichtdicken von jeweils 3% bis 20% der Gesamtdicke des Bandes plattiert wird. Bei den betreffenden Legierungen kann es sich beispielsweise um typische Lotlegierungen, wie EN AW-4045, EN AW-4343, EN AW-4004, EN AW-4104 und deren Modifikationen sowie typische Schutzplattierungen, wie EN AW-1050, EN AW-1050A, EN AW-7072 und deren Modifikationen handeln. Die Plattierung wird dabei bevorzugt durch Walzplattieren aufgebracht.

Nachfolgend wird die Erfindung anhand von Ausführungsbeispielen näher erläutert:

In Tabelle 1 sind für AlMn-Bleche 1 bis 8 die Gehalte der Legierungselemente eingetragen. Tabelle 1:

|  | Si | Fe | Cu | Mn | Mg | Cr | Zn | Ti | Zr | Sn |
|---|---|---|---|---|---|---|---|---|---|---|
| 1 | 0,89 | 0,31 | 0,011 | 1,08 | 0,001 | 0,170 | 0,006 | 0,008 | - | - |
| 2 | 0,90 | 0,30 | 0,010 | 1,05 | 0,001 | 0,005 | 1,090 | 0,007 | - | - |
| 3 | 0,55 | 0,27 | 0,009 | 1,42 | 0,031 | 0,011 | 0,007 | 0,005 | - | - |
| 4 | 0,57 | 0,30 | 0,140 | 1,07 | 0,028 | 0,116 | 0,004 | 0,006 | - | - |
| 5 | 0,84 | 0,29 | 0,008 | 1,33 | 0,063 | 0,111 | 0,005 | 0,009 | - | - |
| 6 | 0,81 | 0,31 | 0,009 | 1,37 | 0,070 | 0,123 | 0,004 | 0,005 | - | 0,034 |
| 7 | 0,43 | 0,31 | 0,013 | 1,03 | 0,001 | 0,015 | 0,007 | 0,008 | - | - |
| 8 | 0,74 | 0,27 | 0,014 | 1,36 | 0,083 | 0,130 | 0,004 | 0,011 | - | 0,089 |
| Angabe der Gehalte in Gew.-% | | | | | | | | | | |

Aus einer entsprechend zusammengesetzten Schmelze sind jeweils Barren stranggegossen worden. Dieses Barren-Vormaterial wurde anschließend auf eine Vorwärmtemperatur vorgewärmt, die zwischen 400 °C und 520 °C, bevorzugt bei 400 °C bis 470 °C lag.

Das derart vorgewärmte Vormaterial wurde mit einer Warmwalzendtemperatur von mindestens 250 °C, bevorzugt 300 °C auf eine Warmbanddicke von 3,5 mm warmgewalzt. Anschließend wurde das Warmband in einem oder mehreren Stichen auf seine Enddicke von 100 µm kaltgewalzt. Eine Zwischenglühung erfolgt während des Kaltwalzens nicht.

Zur Einstellung des Lieferzustandes wurde schließlich eine Glühbehandlung durchgeführt, wobei in Abhängigkeit von den Vorgaben des Verarbeiters ein Weichglühen oder ein Rückglühen durchgeführt wurde.

Die kaltgewalzten Bänder wurden endlich zu Blechen konfektioniert.

Die derart hergestellten AlMn-Bleche wiesen im weichgeglühten Auslieferungszustand eine Streckgrenze $R_{p0,2}$

EP 1 247 873 B1

von höchstens 80 MPa, eine Zugfestigkeit $R_m$ von mindestens 100 MPa und eine Bruchdehnung $A_{100}$ von mindestens 3 % auf.

Aus den erhaltenen AlMn-Blechen 1 bis 8 (ANZAHL DER BEISPIELE) wurden Lamellen gefertigt, die für die Herstellung von Wärmetauschern für Automobil-Motoren bestimmt waren. Die Bleche ließen sich mit einem Biegeradius von weniger als 1 mm bei einer 180 ° Biegung kaltverformen.

Nach der Fertigung der Wärmetauscher durch Verlöten wiesen diese Lamellen jeweils eine Streckgrenze $R_{p0,2}$ von mindestens 60 MPa, bei manchen Beispielen von mehr als 65 MPa, und eine unterschiedliche Korrosionsbeständigkeit auf. Die Zugversuche zur Ermittlung der mechanischen Kennwerte wurden dabei anhand von Bandabschnitten, die einem simulierten Lötzyklus unterworfen wurden, durchgeführt. Der Lötzyklus wurde ausgehend von Raumtemperatur mit einer Aufheizgeschwindigkeit von ca. 25 K/min, einer Haltezeit von 3 min bei einer Temperatur von 600°C und einer anschließenden Abkühlung auf Raumtemperatur mit einer Abkühlgeschwindigkeit von ca. 40 K/min gefahren. In Tabelle 2 sind die Streckgrenze $R_{p0,2}$ und eine Bewertung der Korrosionsbeständigkeit für die Bleche 1 bis 8 im gelöteten Zustand angegeben.

Tabelle 2:

| | | | | Gelöteter Zustand | | | |
|---|---|---|---|---|---|---|---|
| | | | | $R_{p0,2}$ [MPa] | Reihenfolge[1] | Ausmaß der Korrosion[2] | Anfälligkeit gegen interkristalline Korrosion[2] |
| 1 | | | | 65 | 7 | 4,0 | 2,5 |
| 2 | | | | 62 | 2 | 2,5 | 1,5 |
| 3 | | | | 64 | 13 | 4,5 | 4,0 |
| 4 | | | | 66 | 9 | 3,0 | 3,0 |
| 5 | | | | 69 | 8 | 4,0 | 3,0 |
| 6 | | | | 70 | 11 | 4,0 | 4,0 |
| 7 | | | | 60 | 14 | 5,0 | 4,5 |
| 8 | | | | 70 | 15 | 4,5 | 5,0 |

[1] 15 = hervorragend; = sehr schlecht
[2] 5,0 = hervorragend; 1,0 = sehr schlecht

Bemerkenswert ist, daß das Blech 5, welches bei einem Si-Gehalt [%Si] von 0,84 Gew.-% kein Zinn enthielt, ein deutlich schlechteres Korrosionsverhalten aufwies als das vergleichbar zusammengesetzte Blech 6, dssen Sn-Gehalt [%Sn] 0,034 Gew.-% bei einem Gehalt [%Si] an Si von 0,81 Gew.-% betrug, so daß beim Blech 6 das Verhältnis [%Sn] / [%Si] 0,042 betrug. Noch bessere Korrosionseigenschaften im gelöteten Zustand weist das Blech 8 auf, bei dem das Verhältnis [%Sn] / [%Si] 0,120 betrug. Wie das Ergebnis von Blech 7 mit einem Gehalt [%Si] an Si von 0,43 Gew.-% und ohne Zugabe von Zinn zeigt, läßt sich ein sehr gutes Korrosionsverhalten auch durch niedrige Si-Gehalte erreichen. Dies führt jedoch nicht zu den hohen Werten für die Streckgrenze $R_{p0,2}$, wie sie z.B. bei den höher Si-haltigen Blechen 6 und 8 erreicht werden. Bemerkenswert ist des weiteren der negative Einfluß von Cu (Blech 4) und insbesondere Zn (Blech 1) auf das Korrosionverhalten.

**Patentansprüche**

1. Verfahren zur Herstellung von AlMn-Bändern oder -Blechen für die Herstellung von Bauteilen durch Löten,

- bei dem aus einer Schmelze, welche (in Gewichts-%)

Si : 0,3 - 1,2 %,
Fe : ≤ 0,5 %,
Cu ≤ 0,1 %,
Mn : 1,0 - 1,8 %,
Mg : ≤ 0,3 %,
Cr + Zr : 0,05 - 0,4 %,

Zn : ≤ 0,1 %,
Ti : ≤ 0,1 %,
Sn : ≤ 0,15 % und

unvermeidbare Begleitelemente, deren einzelne Gehalte höchstens 0,05 % und deren Summe höchstens 0,15 % beträgt, sowie als
Rest Aluminium
enthält, ein Vormaterial erzeugt wird,
- bei dem das Vormaterial bei einer weniger als 520°C betragenden Vorwärmtemperatur über eine Haltezeit von maximal 12 Stunden vorgewärmt wird,
- bei dem das vorgewärmte Vormaterial zu einem Warmband mit einer Warmwalzendtemperatur von mindestens 250°C warmgewalzt wird und
- bei dem das Warmband zu Kaltband ohne Zwischenglühung kaltgewalzt wird.

2. Verfahren nach einem der voranstehenden Ansprüche,
**dadurch gekennzeichnet, daß** das Verhältnis des Sn-Gehaltes zum Si-Gehalt der Schmelze

$$[\%Sn]/[\%Si] \geq 0,03$$

ist.

3. Verfahren nach Anspruch 2, **dadurch gekennzeichnet, daß** das Verhältnis $[\%Sn]/[\%Si] \geq 0,1$ ist.

4. Verfahren nach Anspruch 2 oder 3, **dadurch gekennzeichnet, daß** der Si-Gehalt der Schmelze mindestens 0,5 Gew.-% beträgt.

5. Verfahren nach Anspruch 4, **dadurch gekennzeichnet, daß** der Si-Gehalt der Schmelze mindestens 0,75 Gew.-% beträgt.

6. Verfahren nach einem der voranstehenden Ansprüche, **dadurch gekennzeichnet, daß** der Si-Gehalt der Schmelze höchstens 1,0 Gew.-% beträgt.

7. Verfahren nach einem der voranstehenden Ansprüche, **dadurch gekennzeichnet, daß** der Fe-Gehalt der Schmelze höchstens 0,3 Gew.-% beträgt.

8. Verfahren nach einem der voranstehenden Ansprüche, **dadurch gekennzeichnet, daß** der Cu-Gehalt der Schmelze höchstens 0,05 Gew.-% beträgt.

9. Verfahren nach einem der voranstehenden Ansprüche, **dadurch gekennzeichnet, daß** der Mn-Gehalt der Schmelze mindestens 1,3 Gew.-% und höchstens 1,5 Gew.-% beträgt.

10. Verfahren nach einem der voranstehenden Ansprüche, **dadurch gekennzeichnet, daß** der Mg-Gehalt der Schmelze höchstens 0,1 Gew.-% beträgt.

11. Verfahren nach einem der voranstehenden Ansprüche, **dadurch gekennzeichnet, daß** der Cr-Gehalt der Schmelze mindestens 0,1 Gew.-% und höchstens 0,2 Gew.-% beträgt.

12. Verfahren nach einem der voranstehenden Ansprüche, **dadurch gekennzeichnet, daß** der Zr-Gehalt der Schmelze höchstens 0,05 Gew.-% beträgt.

13. Verfahren nach einem der voranstehenden Ansprüche, **dadurch gekennzeichnet, daß** der Zn-Gehalt der Schmelze höchstens 0,05 Gew.-% beträgt.

14. Verfahren nach einem der voranstehenden Ansprüche, **dadurch gekennzeichnet, daß** der Ti-Gehalt der Schmelze höchstens 0,05 Gew.-% beträgt.

**15.** Verfahren nach einem der voranstehenden Ansprüche, **dadurch gekennzeichnet, daß** die Streckgrenze $R_{p0,2}$ des AlMn-Blechs nach dem Löten bei mindestens 60 MPa, insbesondere bei mindestens 65 MPa, liegt.

**16.** Verfahren nach einem der voranstehenden Ansprüche, **dadurch gekennzeichnet, daß** als Vormaterial aus der Schmelze stranggegossene Barren verarbeitet werden.

**17.** Verfahren nach einem der voranstehenden Ansprüche, **dadurch gekennzeichnet, daß** die Vorwärmtemperatur des Metalls höchstens 470 °C beträgt.

**18.** Verfahren nach einem der voranstehenden Ansprüche, **dadurch gekennzeichnet, daß** die Vorwärmtemperatur mindestens 400 °C beträgt.

**19.** Verfahren nach einem der voranstehenden Ansprüche, **dadurch gekennzeichnet, daß** die Haltezeit beim Vorwärmen höchstens 5 Stunden beträgt.

**20.** Verfahren nach einem der voranstehenden Ansprüche, **dadurch gekennzeichnet, daß** die Dicke des Warmbands 2 bis 10 mm beträgt.

**21.** Verfahren nach einem der voranstehenden Ansprüche, **dadurch gekennzeichnet, daß** die Walzendtemperatur beim Warmwalzen mindestens 250°C, insbesondere mindestens 300 °C, beträgt.

**22.** Verfahren nach einem der voranstehenden Ansprüche, **dadurch gekennzeichnet, daß** das Kaltband einer Glühbehandlung unterzogen wird.

**23.** Verfahren nach Anspruch 22, **dadurch gekennzeichnet, daß** das Kaltband im Coil geglüht wird.

**24.** Verfahren nach Anspruch 22, **dadurch gekennzeichnet, daß** das Kaltband im Durchlauf geglüht wird.

**25.** Verfahren nach einem der Ansprüche 23 oder 24, **dadurch gekennzeichnet, daß** die Temperatur des AlMn-Blechs während desGlühens mindestens 300 °C beträgt.

**26.** Verfahren nach Anspruch 25, **dadurch gekennzeichnet, daß** die Temperatur des AlMn-Blechs während der Glühung mindestens 350 °C beträgt.

**27.** Verfahren nach einem der voranstehenden Ansprüche, **dadurch gekennzeichnet, daß** die Dicke des kaltgewalzten Bandes 50 $\mu$m bis 500 $\mu$m beträgt.

**28.** Verfahren nach einem der voranstehenden Ansprüche, **dadurch gekennzeichnet, daß** das Band ein- oder beiseitig mit einer oder zwei Al-Legierungen, mit Plattierschichtdicken von jeweils 3% bis 20% der Gesamtdicke des Bandes plattiert wird.

**29.** Verfahren nach Anspruch 28, **dadurch gekennzeichnet, daß** die Plattierungen mittels Warmwalzplattieren aufgebracht werden.

**30.** AlMn-Band oder -Blech für die Herstellung von Bauteilen durch Löten, **dadurch gekennzeichnet, daß** das AlMn-Band oder -Blech nach einem Verfahren gemäß einem der Patentansprüche 1 bis 29 hergestellt worden ist.

**Claims**

**1.** Method for producing AlMn strips or sheets for producing components by soldering,

- wherein a precursor material is produced from a melt, which contains (in weight %)

Si : 0.3 - 1.2 %
Fe : ≤ 0.5 %
Cu : ≤ 0.1 %
Mn : 1.0 - 1.8 %

Mg : ≤ 0.3 %
Cr + Zr : 0.05 - 0.4 %
Zn : ≤ 0.1 %
Ti : ≤ 0.1 %
Sn : ≤ 0.15 %

and unavoidable accompanying elements, whose individual amounts are at most 0.05 % and whose sum is at most 0.15 %, as well as aluminium as the remainder,
- wherein the precursor material is preheated at a preheating temperature of less than 520°C over a dwell time of at most 12 hours,
- wherein the preheated precursor material is hot-rolled into a hot strip using a final hot-rolling temperature of at least 250°C and
- wherein the hot strip is cold-rolled into a cold strip without intermediate annealing.

2. Method according to one of the preceding claims, **characterized in that** the ratio of the Sn content to the Si content of the melt [% Sn] / [% Si] is ≥ 0.03.

3. Method according to Claim 2, **characterized in that** the ratio [% Sn] / [% Si] is > 0.1.

4. Method according to Claim 2 or 3, **characterized in that** the Si content of the melt is at least 0.5 % by weight.

5. Method according to Claim 4, **characterized in that** the Si content of the melt is at least 0.75 % by weight.

6. Method according to any one of the preceding claims, **characterized in that** the Si content of the melt is at most 1.0 % by weight.

7. Method according to any one of the preceding claims, **characterized in that** the Fe content of the melt is at most 0.3 % by weight.

8. Method according to any one of the preceding claims, **characterized in that** the Cu content of the melt is at most 0.05 % by weight.

9. Method according to any one of the preceding claims, **characterized in that** the Mn content of the melt is at least 1.3 % by weight and at most 1.5 % by weight.

10. Method according to any one of the preceding claims, **characterized in that** the Mg content of the melt is at most 0.1 % by weight.

11. Method according to any one of the preceding claims, **characterized in that** the Cr content of the melt is at least 0.1 % by weight and at most 0.2 % by weight.

12. Method according to any one of the preceding claims, **characterized in that** the Zr content of the melt is at most 0.05 % by weight.

13. Method according to any one of the preceding claims, **characterized in that** the Zn content of the melt is at most 0.05 % by weight.

14. Method according to any one of the preceding claims, **characterized in that** the Ti content of the melt is at most 0.05 % by weight.

15. Method according to any one of the preceding claims, **characterized in that** the limit of elasticity $R_{p0.2}$ of the AlMn sheet after the soldering is at least 60 MPa, particularly at least 65 MPa.

16. Method according to any one of the preceding claims, **characterized in that** ingots cast from the melt are processed as the precursor material.

17. Method according to any one of the preceding claims, **characterized in that** the preheating temperature of the metal is at most 470°C.

18. Method according to any one of the preceding claims, **characterized in that** the preheating temperature is at least 400°C.

19. Method according to any one of the preceding claims, **characterized in that** the dwell time during the preheating is at most 5 hours.

20. Method according to any one of the preceding claims, **characterized in that** the thickness of the hot strip is 2 to 10 mm.

21. Method according to any one of the preceding claims, **characterized in that** the final rolling temperature during the hot-rolling is at least 250°C, particularly at least 300°C.

22. Method according to any one of the preceding claims, **characterized in that** the cold strip is subjected to an annealing treatment.

23. Method according to Claim 22, **characterized in that** the cold strip is annealed in the coil.

24. Method according to Claim 22, **characterized in that** the cold strip is annealed in the continuous furnace.

25. Method according to either of Claims 23 and 24, **characterized in that** the temperature of the AlMn sheet is at least 300°C during the annealing.

26. Method according to Claim 25, **characterized in that** the temperature of the AlMn sheet is at least 350°C during the annealing.

27. Method according to any one of the preceding claims, **characterized in that** the thickness of the cold-rolled strip is between 50 $\mu$m and 500 $\mu$m.

28. Method according to any one of the preceding claims, **characterized in that** the strip is cladded on one or both sides using one or two aluminium alloys, with cladding layer thicknesses of 3% - 20% of the total thickness of the strip on each side.

29. Method according to Claim 28, **characterized in that** the claddings are applied using hot roll cladding.

30. AlMn strip or sheet for producing components by soldering, **characterized in that** the AlMn strip or sheet is produced according to a method according to any one of Claims 1 to 29.

**Revendications**

1. Procédé de préparation de rubans ou de tôles de AlMn, pour la préparation de pièces par brasage,

   - dans lequel on produit un pré-matériau à partir d'une masse fondue, qui contient (en % en poids)

   Si : 0,3 - 1,2%
   Fe : ≤ 0,5%
   Cu : ≤ 0,1%
   Mn : 1,0 - 1,8%
   Mg : ≤ 0,3%
   Cr + Zn : 0,05 - 0,4%
   Zn : ≤ 0,1%
   Ti : ≤ 0,1%
   Sn : ≤ 0,15%, et

   les impuretés inévitables, dont la teneur individuelle se situe à maximum 0,05% et la somme à maximum 0,15%, ainsi que le reste étant de l'aluminium,
   - dans lequel le pré-matériau est pré-chauffé à une température de pré-chauffage s'élevant à moins de 520°C pendant une durée de maximum 12 heures,
   - dans lequel le pré-matériau pré-chauffé est laminé à chaud en un ruban chaud avec une température finale de laminage à chaud d'au moins 250°C, et
- dans lequel le ruban chaud est laminé à froid en un ruban froid sans recuit intermédiaire.

2. Procédé selon l'une des revendications précédentes, **caractérisé en ce que** le rapport de la teneur en Sn à la teneur en Si de la masse fondue est de

$$[\%Sn]/[\%Si] \geq 0,03.$$

3. Procédé selon la revendication 2, **caractérisé en ce que** le rapport [%Sn]/[%Si] est $\geq 0,1$.

4. Procédé selon la revendication 2 ou 3,
**caractérisé en ce que** la teneur en Si dans la masse fondue s'élève à au moins 0,5% en poids.

5. Procédé selon la revendication 4, **caractérisé en ce que** la teneur en Si dans la masse fondue s'élève à au moins 0,75% en poids.

6. Procédé selon l'une des revendications précédentes, **caractérisé en ce que** la teneur en Si dans la masse fondue s'élève à maximum 1,0% en poids.

7. Procédé selon l'une des revendications précédentes, **caractérisé en ce que** la teneur en Fe dans la masse fondue s'élève à maximum 0,3% en poids.

8. Procédé selon l'une des revendications précédentes, **caractérisé en ce que** la teneur en Cu dans la masse fondue s'élève à maximum 0,05% en poids.

9. Procédé selon l'une des revendications précédentes, **caractérisé en ce que** la teneur en Mn dans la masse fondue s'élève à minimum 1,3% en poids et maximum 1,5% en poids.

10. Procédé selon l'une des revendications précédentes, **caractérisé en ce que** la teneur en Mg dans la masse fondue s'élève à maximum 0,1% en poids.

11. Procédé selon l'une des revendications précédentes, **caractérisé en ce que** la teneur en Cr dans la masse fondue s'élève à minimum 0,1% en poids et maximum 0,2% en poids.

12. Procédé selon l'une des revendications précédentes, **caractérisé en ce que** la teneur en Zr dans la masse fondue s'élève à maximum 0,05% en poids.

13. Procédé selon l'une des revendications précédentes, **caractérisé en ce que** la teneur en Zn dans la masse fondue s'élève à maximum 0,05% en poids.

14. Procédé selon l'une des revendications précédentes, **caractérisé en ce que** la teneur en Ti dans la masse fondue s'élève à maximum 0,05% en poids.

15. Procédé selon l'une des revendications précédentes, **caractérisé en ce que** la limite d'étirage $R_{p0,2}$ de la tôle AlMn se situe après le brasage, à au moins 60 MPa, en particulier à au moins 65 MPa.

16. Procédé selon l'une des revendications précédentes, **caractérisé en ce que** l'on usine des barreaux comme pré-matériau à partir de la masse fondue.

17. Procédé selon l'une des revendications précédentes, **caractérisé en ce que** la température de pré-chauffage du métal se situe à maximum 470°C.

18. Procédé selon l'une des revendications précédentes, **caractérisé en ce que** la température de pré-chauffage se situe à au moins 400°C.

19. Procédé selon l'une des revendications précédentes, **caractérisé en ce que** la durée du pré-chauffage se situe à maximum 5 heures.

**20.** Procédé selon l'une des revendications précédentes, **caractérisé en ce que** l'épaisseur du ruban chaud se situe dans l'intervalle allant de 2 à 10 mm.

**21.** Procédé selon l'une des revendications précédentes, **caractérisé en ce que** la température du laminage à chaud se situe pendant le laminage à chaud, à au moins 250°C, en particulier au moins 300°C.

**22.** Procédé selon l'une des revendications précédentes, **caractérisé en ce que** le ruban froid est soumis à un traitement de recuit.

**23.** Procédé selon la revendication 22, **caractérisé en ce que** le ruban froid est recuit dans une bobine.

**24.** Procédé selon la revendication 22, **caractérisé en ce que** le ruban froid est recuit par passe.

**25.** Procédé selon la revendication 23 ou 24, **caractérisé en ce que** la température de la tôle de AlMn pendant le recuit se situe à au moins 300°C.

**26.** Procédé selon la revendication 25, **caractérisé en ce que** la température de la tôle de AlMn pendant le recuit se situe à au moins 350°C.

**27.** Procédé selon l'une des revendications précédentes, **caractérisé en ce que** l'épaisseur du ruban laminé à froid se situe dans l'intervalle allant de 50 $\mu$m à 500 $\mu$m.

**28.** Procédé selon l'une des revendications précédentes, **caractérisé en ce que** le ruban est plaqué sur une ou les deux faces d'un ou de deux alliages d'Al, avec des épaisseurs de couche de placage de chaque fois, 3% à 20% de l'épaisseur totale du ruban.

**29.** Procédé selon la revendication 28, **caractérisé en ce que** les placages sont appliqués par placage par laminage à chaud.

**30.** Rubans ou tôles de AlMn pour la préparation de pièces par brasage, **caractérisés en ce que** le ruban ou la tôle de AlMn a été préparée par un procédé selon l'une des revendications 1 à 29.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9718946 A